# EUROPÄISCHE PATENTSCHRIFT

(11) **EP 1 612 583 B1**
(45) Veröffentlichungstag und Bekanntmachung des Hinweises auf die Patenterteilung: **21.02.2007**
(21) Anmeldenummer: 04103050.3
(22) Anmeldetag: 29.06.2004
(51) Int. Cl.: G01T 1/29, G03B 42/02

(54) **Vorrichtung und Verfahren zum Auslesen von in einer Speicherphosphorschicht gespeicherten Röntgeninformationen**
Apparatus and method to readout X-ray information in a phosphor layer
Dispositif et méthode pour la lecture des informations radiographiques à partir d'une couche de phosphore

(43) Veröffentlichungstag der Anmeldung: 04.01.2006
(73) Patentinhaber: Agfa-Gevaert HealthCare GmbH, 51373 Leverkusen (DE)
(72) Erfinder: Gerstlauer, Bernd, 81541 München (DE); Brautmeier, Detlef, 85716 Unterschleissheim (DE); Nebosis, Rainer, 81541 München (DE); Kasper, Axel, 81539 München (DE)

(56) Entgegenhaltungen:
- US-A- 4 943 871
- US-A- 5 231 575
- US-B1- 6 204 495

## Beschreibung

Die Erfindung betrifft eine Vorrichtung sowie ein entsprechendes Verfahren zum Auslesen von in einer Speicherphosphorschicht gespeicherter Röntgeninformation gemäß dem Oberbegriff des Anspruchs 1 bzw. 12.

Röntgenbilder können in sogenannten Speicherphosphoren gespeichert werden, wobei die durch ein Objekt, beispielsweise einen Patienten, hindurchtretende Röntgenstrahlung als latentes Bild in einer Speicherphosphorschicht gespeichert wird. Zum Auslesen des latenten Bildes wird die Speicherphosphorschicht mit Stimulationslicht bestrahlt und dabei zur Aussendung von Emissionslicht angeregt. Das Emissionslicht, dessen Intensität dem in der Speicherphosphorschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

In der Patentschrift US 4,484,073 werden eine Vorrichtung und ein Verfahren beschrieben, bei welchen ein Laserstrahl mittels eines Galvanometerspiegels derart abgelenkt wird, dass der Laserstrahl im Wesentlichen punktförmig auf die auszulesende Speicherphosphorschicht trifft und diese in einem zeilenförmigen Bereich überstreicht. Das Dokument US 4 943 871 offenbart auch eine ähnliche Vorrichtung. Das hierbei von der Speicherphosphorschicht emittierte Emissionslicht wird von einem Photomultiplier erfasst und in ein elektrisches Signal umgewandelt. Durch einen Transport der Speicherphosphorschicht senkrecht zum zeilenförmigen Bereich wird ein sukzessives Auslesen einzelner zeilenförmiger Bereiche der Speicherphosphorschicht erreicht, so dass schließlich ein zweidimensionales Röntgenbild erhalten wird, welches sich aus einzelnen Zeilen zusammensetzt, die sich ihrerseits jeweils aus einer Vielzahl einzelner Bildpunkte zusammensetzen. Zur Umwandlung des elektrischen Signals des Photomultipliers in einzelne, den jeweiligen Bildpunkten des Röntgenbildes zugeordneten Bildsignale wird mittels eines sogenannten linearen Encoders für jeden Bildpunkt einer Zeile ein Positionsreferenzpuls erzeugt und das elektrische Signal des Photomultipliers jeweils nach einem Positionsreferenzpuls über ein festes Zeitintervall integriert. Der bei der jeweiligen Integration erhaltene Signalwert wird dem entsprechenden Bildpunkt zugeordnet.

Da die Geschwindigkeit des Ablenkelements im Allgemeinen Schwankungen unterliegt, ist die Geschwindigkeit des Laserstrahls nicht über die gesamte auszulesende Zeile konstant, d.h. der Laserstrahl überstreicht innerhalb des vorgegebenen, festen Zeitintervalls nach einem Positionsreferenzpuls je nach momentaner Geschwindigkeit unterschiedlich breite Bereiche der Speicherphosphorschicht. Dies hat zur Folge, dass bei der beschriebenen Integration des elektrischen Signals des Photomultipliers im Allgemeinen unterschiedlich breite Bereiche erfasst werden. So führt eine hohe Momentangeschwindigkeit des Laserstrahls dazu, dass in dem vorgegebenen Zeitintervall ein relativ breiter Teilbereich des einem Bildpunkt entsprechenden Bereichs von dem Laserstrahl gescannt wird. Demgegenüber führt eine niedrige Momentangeschwindigkeit zur Erfassung eines relativ schmalen Teilbereichs des einem Bildpunkt zugeordneten Bereichs der Zeile. Insgesamt muss daher ein teilweiser Informationsverlust und damit eine Beeinträchtigung der Bildqualität des ausgelesenen Röntgenbildes hingenommen werden.

Es ist Aufgabe der Erfindung, eine Vorrichtung sowie ein entsprechendes Verfahren zum Auslesen von in einer Speicherphosphorschicht gespeicherter Röntgeninformation anzugeben, bei welcher bzw. welchem, insbesondere bei vermindertem Informationsverlust, die Bildqualität erhöht wird.

Diese Aufgabe wird durch die Vorrichtung gemäß Anspruch 1 sowie durch das entsprechende Verfahren gemäß Anspruch 12 dadurch gelöst, dass mindestens zwei Sensoren vorgesehen sind, welche an unterschiedlichen Referenzpositionen angeordnet sind und mindestens zwei Referenzzeitpunkte erfassen können, zu welchen sich der Stimulationslichtstrahl an den unterschiedlichen Referenzpositionen befindet. Darüber hinaus ist eine Verarbeitungseinrichtung vorgesehen, welche zum Ableiten einer Vielzahl von Detektorsignalwerten aus dem Detektorsignal und zum Ableiten von Bildsignalwerten aus zwischen jeweils zwei, insbesondere aufeinanderfolgenden, Referenzzeitpunkten abgeleiteten Detektorsignalwerten ausgebildet ist.

Die Erfindung basiert auf dem Gedanken, mittels zweier oder mehrerer Sensoren die Zeitpunkte zu erfassen, in denen sich der Stimulationslichtstrahl an zwei oder mehreren Referenzpositionen befindet, und die zwischen den erfassten Zeitpunkten aus dem Detektorsignal abgeleiteten Detektorsignalwerte den einzelnen, zwischen den jeweiligen Referenzpositionen liegenden Bildpunkten des Röntgenbildes zuzuordnen. Aus den jeweils einem Bildpunkt zugeordneten, im Allgemeinen mehreren Detektorsignalwerten wird dann ein zum jeweiligen Bildpunkt gehörender Bildsignalwert errechnet. Im Vergleich zu dem aus dem Stand der Technik bekannten Verfahren wird bei der erfindungsgemäßen Ableitung der einzelnen Bildsignalwerte ein größerer Anteil der beim Scannen der Zeile erfassten Information berücksichtigt.

Durch die erfindungsgemäße Vorrichtung bzw. das Verfahren werden somit Informationsverluste gegenüber den aus dem Stand der Technik bekannten Vorrichtungen und Verfahren reduziert. Darüber hinaus werden Versetzungen einzelner ausgelesener Zeilen des Röntgenbildes relativ zueinander, welche von statistischen oder systematischen Gleichlaufschwankungen des Stimulationslichtstrahls herrühren können, auf einfache und zuverlässige Weise vermindert. Die erfindungsgemäße Vorrichtung sowie das entsprechende Verfahren erlauben damit eine Erhöhung der Bildqualität bei gleichzeitig vermindertem Informationsverlust.

In einer ersten Variante der Erfindung ist vorgesehen, einen ersten Sensor derart anzuordnen, dass ein erster Referenzzeitpunkt vor der Bewegung des Stimulationslichtstrahls entlang der Zeile erfasst werden kann, sowie einen zweiten Sensor derart anzuordnen, dass ein zweiter Referenzzeitpunkt nach der Bewegung des Stimulationslichtstrahls entlang der Zeile erfasst werden kann. Dies stellt eine besonders einfach zu realisierende Ausgestaltung der erfindungsgemäßen Vorrichtung bzw. des entsprechenden Verfahrens dar.

Vorzugsweise ist hierbei der erste Sensor im Bereich eines Anfangs und der zweite Sensor im Bereich eines Endes der auszulesenden Zeile der Speicherphosphorschicht, vorzugsweise jeweils in unmittelbarer Nähe der Speicherphosphorschicht, angeordnet. Der Stimulationslichtstrahl trifft dann unmittelbar vor sowie unmittelbar nach dem Scannen der auszulesenden Zeile auf den ersten bzw. zweiten Sensor.

Hierbei können der erste und/oder zweite Sensor auch derart angeordnet werden, dass der Stimulationslichtstrahl jeweils eine bestimmte Zeitspanne vor bzw. nach der Bewegung entlang der Zeile auf den ersten bzw. zweiten Sensor trifft. Die Referenzzeitpunkte können dann einfach durch Addition bzw. Subtraktion der jeweiligen Zeitspanne zu dem mit dem ersten Sensor bzw. von dem mit dem zweiten Sensor erfassten Zeitpunkt errechnet werden. Bei dieser Variante brauchen die beiden Sensoren nicht in unmittelbarer Nähe der Speicherphosphorschicht angeordnet zu werden, sondern können abhängig von dem zur Verfügung stehenden Platz in der Vorrichtung positioniert werden. Insbesondere müssen dabei die beiden Sensoren nicht in der Ebene der Speicherphosphorschicht positioniert sein.

Eine weitere Variante der Erfindung sieht vor, dass alternativ oder zusätzlich zum ersten und zweiten Sensor mehrere Sensoren entlang einer Sensorzeile angeordnet sind und mehrere Referenzzeitpunkte während der Bewegung des Stimulationslichtstrahls entlang der Sensorzeile erfassen können, und die Verarbeitungseinrichtung zum Ableiten von Bildsignalwerten aus den jeweils zwischen den Referenzzeitpunkten abgeleiteten Detektorsignalwerten ausgebildet ist. Hierdurch wird eine besonders genaue und zuverlässige Vermeidung von Bildfehlern gewährleistet.

Vorzugsweise werden die Referenzzeitpunkte bei dieser Ausführungsform bereits vor dem eigentlichen Auslesen der Speicherphosphorschicht erfasst und gespeichert und erst bei einem anschließenden Auslesen der Speicherphosphorschicht zur Ableitung der einzelnen Bildsignalwerte aus den Detektorsignalwerten herangezogen. Die erfassten Referenzzeitpunkte spiegeln hierbei die charakteristischen Geschwindigkeitsschwankungen des Ablenkelements bzw. des Laserstrahls während dessen Bewegung über die Zeile wider. Durch Berücksichtigung der Referenzzeitpunkte bei der Ableitung der einzelnen Bildsignalwerte aus den Detektorsignalwerten können somit etwaige Bildfehler aufgrund von Geschwindigkeitsschwankungen des Ablenkelements bzw. des Laserstrahls vermindert werden.

Vorzugsweise wird die Sensorzeile an dem Ort platziert, an dem sich beim Auslesen die Speicherphosphorschicht befindet. Nach dem Erfassen der Referenzzeitpunkte, welches vorzugsweise kurz vor dem Auslesen der Speicherphosphorschicht erfolgt, wird die Sensorzeile entfernt, und die auszulesende Speicherphosphorschicht kann dann zum Auslesen am zeilenförmig bewegten Laserstrahl vorbeigeführt werden.

In einer weiteren bevorzugten Ausgestaltung der Erfindung ist vorgesehen, dass die Sensoren mit jeweils einer Schlitzblende versehen sind, durch welche zumindest ein Teil des Stimulationslichtstrahls hindurchtreten und auf den jeweiligen Sensor treffen kann. Durch die Schlitzblenden wird eine besonders genaue Erfassung der einzelnen Referenzzeitpunkte erreicht.

Vorzugsweise ist eine Leiterplatte vorgesehen, an welcher die Sensoren angebracht sind und welche die jeweiligen Schlitzblenden umfasst. Hierdurch wird ein einfacher und kompakter Aufbau erreicht.

Eine weitere bevorzugte Ausgestaltung dieser Variante besteht darin, dass die Leiterplatte für das Licht des Stimulationslichtstrahls zumindest teilweise durchlässig ist. Die einzelnen Schlitzblenden befinden sich bei dieser Ausgestaltung vorzugsweise auf der dem einfallenden Stimulationslichtstrahl zugewandten Seite der Leiterplatte. Alternativ können sich die Schlitzblenden aber auch auf der vom einfallenden Stimulationslichtstrahl abgewandten Seite der Leiterplatte befinden. Die Schlitzblenden bestehen vorzugsweise aus einem für das Licht des Stimulationslichtstrahls im Wesentlichen undurchlässigen Material, wie beispielsweise Metall.

Auf der dem einfallenden Stimulationslichtstrahl abgewandten Seite der Leiterplatte sind im Bereich der einzelnen Schlitzblenden die Sensoren, insbesondere Fotodioden, angeordnet, welche zumindest einen Teil des durch die einzelnen Schlitzblenden und die Leiterplatte jeweils hindurchtretenden Stimulationslichtstrahls erfassen können. Die Sensoren sind hierbei vorzugsweise derart aufgebaut, dass ihre jeweilige lichtempfindliche Fläche der Leiterplatte zugewandt ist. Diese Ausführungsform der Erfindung erlaubt bei einfachem und kompaktem Aufbau eine sehr präzise Festlegung der Referenzpositionen durch eine entsprechende Gestaltung der Schlitzblenden auf der dem einfallenden Lichtstrahl zugewandten Seite der Leiterplatte. Vorzugsweise wird dies durch eine entsprechende Gestaltung einer doppelseitig mit einer Metallschicht beschichteten Leiterplatte erreicht.

In einer bevorzugten Ausgestaltung des erfindungsgemäßen Verfahrens ist vorgesehen, dass die Bildsignalwerte jeweils durch Bildung eines, insbesondere arithmetischen, Mittelwertes aus mehreren Detektorsignalwerten abgeleitet werden. Die Mittelwertbildung stellt eine einfache, effiziente und besonders zuverlässige Berechnungsweise der Bildsignalwerte aus den jeweiligen Detektorsignalwerten dar. Durch Bildung des arithmetischen Mittelwertes wird eine hohe Bildqualität erzielt.

Weiterhin ist bevorzugt, dass die Anzahl der Detektorsignalwerte, aus welchen jeweils ein Bildsignalwert abgeleitet wird, aus den erfassten Referenzzeitpunkten ermittelt wird. Insbesondere in Verbindung mit einer anschließenden Mittelwertbildung wird hierdurch eine hohe Bildschärfe erzielt.

Um eine besonders hohe Bildschärfe bei möglichst geringem Bildrauschen zu erzielen, wird das Detektorsignal mit einer Abtastfrequenz abgetastet, welche einem ganzzahligen Vielfachen N des Kehrwertes einer mittleren Zeitdauer Δt, die der Stimulationslichtstrahl im zeitlichen Mittel für die Bewegung über einen Bildpunkt des Röntgenbildes entlang der Zeile benötigt, entspricht: f = N/Δt.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: eine Vorrichtung zum Auslesen einer Speicherphosphorschicht;
- Fig. 2: einen Verlauf des Detektorsignals;
- Fig. 3: aus dem Detektorsignal abgeleitete Detektorsignalwerte;
- Fig. 4: ein Beispiel für aus den Detektorsignalwerten abgeleitete Bildsignalwerte;
- Fig. 5 a) b): weitere Beispiele für aus Detektorsignalwerten abgeleitete Bildsignalwerte;
- Fig. 6: eine Ausgestaltung der Vorrichtung zum Auslesen einer Speicherphosphorschicht; und
- Fig. 7: einen Querschnitt durch die in Fig. 6 dargestellte Sensorzeile.

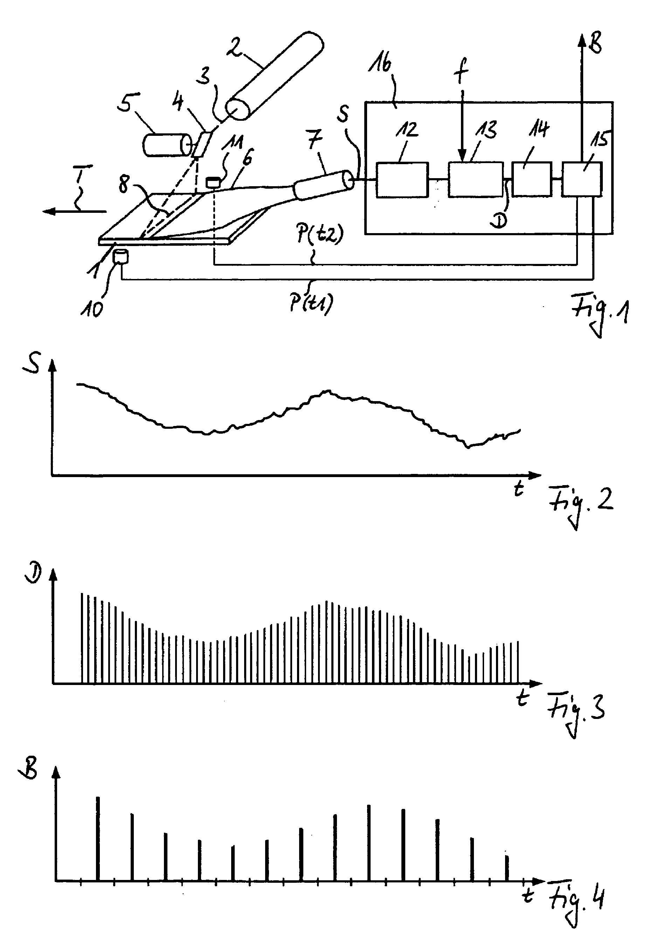

Fig. 1 zeigt eine Vorrichtung zum Auslesen einer Speicherphosphorschicht 1. Durch einen Laser 2 wird ein Stimulationslichtstrahl 3 erzeugt, welcher durch einen von einem Motor 5 in Rotation versetztes Ablenkelement 4 derart abgelenkt wird, dass sich dieser entlang einer Zeile 8 über die auszulesende Speicherphosphorschicht 1 bewegt. Hierbei sendet die Speicherphosphorschicht 1 in Abhängigkeit der darin gespeicherten Röntgeninformation Emissionslicht aus, welches von einer optischen Sammeleinrichtung 6, beispielsweise einem Lichtleiterbündel, gesammelt und von einem optischen Detektor 7, vorzugsweise einem Photomultiplier, erfasst und dabei in ein entsprechendes Detektorsignal S umgewandelt wird. Das Ablenkelement 4 ist vorzugsweise als Spiegel ausgebildet, wie z.B. als Polygonspiegel oder Galvanometerspiegel.

Das Detektorsignal S wird einer Verarbeitungseinrichtung 16 zugeführt, in welcher Bildsignalwerte B für einzelne Bildpunkte des ausgelesenen Röntgenbildes abgeleitet werden. Soll die ausgelesene Zeile 8 beispielsweise aus 1000 Bildpunkten zusammengesetzt sein, so werden aus dem beim Auslesen der Zeile 8 erhaltenen Detektorsignal S 1000 entsprechende Bildsignalwerte B abgeleitet.

Durch einen Transport der Speicherphosphorschicht 1 in Transportrichtung T wird ein sukzessives Auslesen einzelner Zeilen 8 erreicht und damit ein zweidimensionales, aus einzelnen Bildpunkten mit jeweils einem zugehörigen Bildsignalwert B bestehendes Röntgenbild erhalten. Beträgt die Anzahl der in Transportrichtung T ausgelesenen Zeilen 8 beispielsweise 1500, so werden mit jeweils 1000 Bildpunkten pro Zeile für das ausgelesene Röntgenbild insgesamt 1500 x 1000 Bildpunkte mit jeweils einem zugehörigen Bildsignalwert B erhalten.

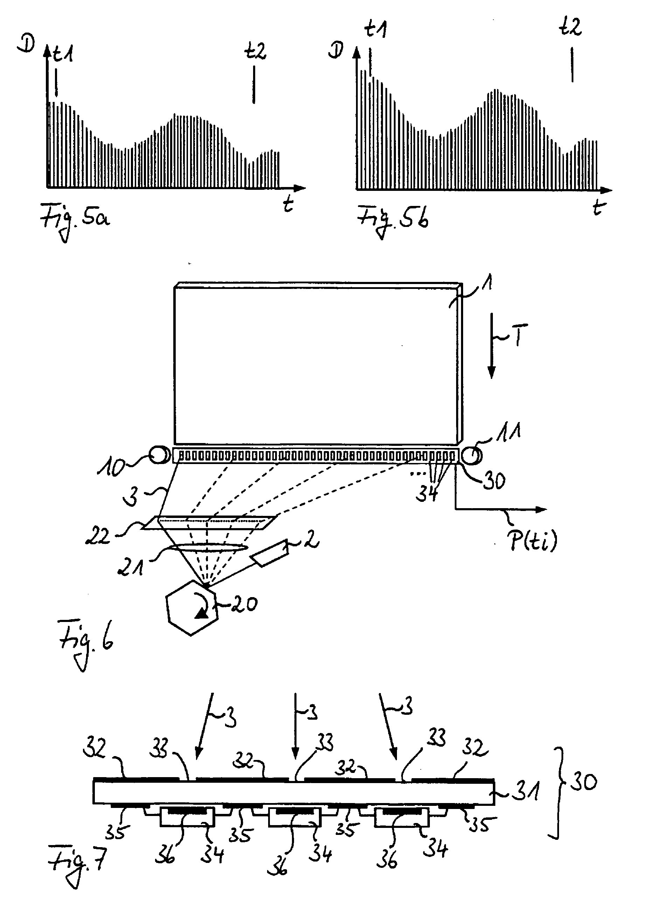

Fig. 2 zeigt einen beispielhaften Verlauf des in der Vorrichtung gemäß Fig. 1 e r-zeugten Detektorsignals S. Im Folgenden wird die erfindungsgemäße Ableitung von Bildsignalwerten B aus dem Detektorsignal S näher erläutert.

Das Detektorsignal S wird zunächst (siehe Fig. 1) durch ein Tiefpassfilter 12 gefiltert, wobei höherfrequente Anteile des Detektorsignals S, insbesondere Rauschanteile, eliminiert werden. Das gefilterte Detektorsignal S wird dann einem Analog-Digital-Wandler 13 zugeführt und dort mit einer Abtastfrequenz f abgetastet, wobei bei jedem Abtastvorgang ein Detektorsignalwert D in jeweils digitalen Einheiten erhalten wird. Das Abtasten des Detektorsignals S im Analog-Digital-Wandler 13 erfolgt vorzugsweise nach dem sog. Sample and Hold-Prinzip, wonach beim Abtasten die jeweils aktuelle analoge Signalhöhe des zu einem Abtastzeitpunkt am Analog-Digital-Wandler 13 anliegenden Detektorsignals S gehalten und in einen entsprechenden digitalen Detektorsignalwert D umgewandelt wird. Nach einer Zwischenspeicherung im Speicher 14 werden in einer Recheneinheit 15 aus den Detektorsignalwerten D die Bildsignalwerte B berechnet.

Der Tiefpassfilter 12 ist vorzugsweise derart ausgestaltet, dass durch diesen Anteile des Detektorsignals S eliminiert werden, welche eine Frequenz f_{g} aufweisen, die größer ist als die halbe Abtastfrequenz f: f_{g} > 0,5·f. Hierdurch werden etwaige durch das Abtasten von hochfrequenten Detektorsignalanteilen erzeugte Bildartefakte vermieden und damit die Bildqualität noch weiter verbessert.

Fig. 3 zeigt eine Vielzahl von aus dem in Fig. 2 dargestellten Detektorsignal S abgeleiteten Detektorsignalwerten D über der Zeit t. Der zeitliche Abstand der einzelnen Detektorsignalwerte D zueinander wird durch die Abtastfrequenz f des Analog-Digitial-Wandlers 13 bestimmt. Jedem Zeitpunkt entspricht hierbei ein bestimmter Ort des Stimulationslichtstrahls 3 auf der Zeile 8 der Speicherphosphorschicht 1.

Die Abtastfrequenz f ist so gewählt, dass für jeden einzelnen Bildpunkt entlang der Zeile 8 mindestens zwei Detektorsignalwerte B erhalten werden, aus welchen dann ein jeweils zu einem Bildpunkt gehörender Bildsignalwert errechnet werden kann. Zur Vereinfachung und besseren Anschaulichkeit wird in diesem Beispiel angenommen, dass die ausgelesene Zeile 8 aus lediglich 13 Bildpunkten bestehen soll. Die Abtastfrequenz f ist in diesem Beispiel so gewählt, dass für jeden der 13 Bildpunkte jeweils fünf Detektorsignalwerte D erhalten wurden.

Die für dieses Beispiel entsprechend abgeleiteten Bildsignalwerte B sind in Fig. 4 dargestellt, wobei aus jeweils fünf der in Fig. 3 dargestellten Detektorsignalwerte D ein Bildsignalwert B errechnet wurde, indem aus den einzelnen Detektorsignalwerten D jeweils der arithmetische Mittelwert ermittelt wurde.

Die Abtastfrequenz f beträgt in diesem Beispiel das Fünffache des Kehrwertes einer mittleren Zeitdauer Δt, welche der Stimulationslichtstrahl 3 im zeitlichen Mittel für die Bewegung über einen Bildpunkt des Röntgenbildes entlang der Zeile 8 benötigt. Das folgende Beispiel soll dies verdeutlichen: Beträgt die mittlere Zeitdauer Δt für die Bewegung des Stimulationslichtstrahls 3 über einen Bildpunkt des Röntgenbildes im Mittel eine Mikrosekunde (1µs), so ergibt sich eine Abtastfrequenz f von 5/Δt = 5/1µs = 5 MHz.

Es ist außerdem von Vorteil, den Bildsignalwert B eines Bildpunktes aus den jeweiligen Detektorsignalwerten D unmittelbar nach dem Ableiten dieser Detektorsignalwerte D aus dem Detektorsignal S zu berechnen. Die einzelnen Bildsignalwerte B der Zeile 8 werden also zeitlich parallel bzw. zeitgleich mit dem Abtasten der Zeile 8 ermittelt. Die Berechnung eines einzelnen Bildpunktes erfolgt dabei stets unmittelbar nach dem Ableiten der für die Berechnung des jeweiligen Bildsignalwerte B erforderlichen zwei oder mehreren Detektorsignalwerte D aus dem Detektorsignal S. Dadurch brauchen lediglich die jeweils zu einem Bildsignalwert B zusammenzufassenden Detektorsignalwerte D im Speicher 14 der Verarbeitungseinrichtung 16 gespeichert zu werden, bevor sie in der Rechenheinheit 15 weiterverarbeitet werden. Der Speicherbedarf im Speicher 14 ist dadurch gering. Darüber hinaus kann durch die zeitgleiche Verarbeitung der Detektorsignalwerte D während des Auslesens der Zeile 8 eine Nachverarbeitung der Detektorsignalwerte D nach dem Ende des Auslesens der Zeile 8 entfallen.

Das mehrmalige Abtasten des Detektorsignals S für jeden einzelnen Bildpunkt, das auch als Oversampling bezeichnet wird, und die Ableitung eines entsprechenden Bildsignalwertes für jeden Bildpunkt der Zeile 8 aus jeweils mehreren Detektorsignalwerten führt insgesamt zu einer Verminderung des dem Detektorsignal S überlagerten Rauschens und damit zu einer verbesserten Bildqualität bei gleichzeitig geringeren Informationsverlusten im Vergleich zu den aus dem Stand der Technik bekannten Vorrichtungen bzw. Verfahren.

Die im Zusammenhang mit den Figuren 2 bis 4 näher erläuterte Signalverarbeitung des Detektorsignals S ist besonders für Scanner mit guten Gleichlaufeigenschaften geeignet, bei welchen der Stimulationslichtstrahl 3 mit im Wesentlichen unveränderlicher Geschwindigkeit über die jeweils auszulesende Zeile 8 der Speicherphosphorschicht 1 bewegt wird. Dies wird in der Regel durch optisch hochwertige Ablenkelemente 4, insbesondere Galvanometer- oder Polygonspiegel, in Verbindung mit einem Motor 5 mit guten Gleichlaufeigenschaften erreicht.

Um die Bildqualität der mit solchen Scannern ausgelesenen Röntgenbilder weiter zu verbessern oder im Falle von kostengünstigeren Scannern mit weniger guten optischen Elementen oder Gleichlaufeigenschaften dennoch ein hohes Maß an Bildqualität zu erzielen, wird vorzugsweise die nachfolgend näher beschriebene Verarbeitung des Detektorsignals S durchgeführt.

Bei einer ersten Variante dieses Verfahrens weist die entsprechende Vorrichtung (siehe Fig. 1) zwei Sensoren 10 und 11 auf, die im Bereich des Anfangs bzw. Endes der Zeile 8 angeordnet sind, entlang welcher sich der Stimulationslichtstrahl 3 bewegt.

Wird der Stimulationslichtstrahl 3 mit dem Ablenkelement 4 in Richtung der Zeile 8 abgelenkt, so passiert dieser den ersten Sensor 10 vor dem Scannen der Zeile 8 und den zweiten Sensor 11 nach dem Scannen der Zeile 8. Das Licht des Stimulationslichtstrahls 3 wird dabei von den beiden lichtempfindlichen Sensoren 10 und 11 erfasst und in entsprechende elektrische Impulse P(t1) und P(t2) zu den Referenzzeitpunkten t1 bzw. t2 umgewandelt und an eine Recheneinheit 15 der Verarbeitungseinrichtung 16 weitergeleitet.

Das während der Bewegung des Stimulationslichtstrahls 3 über die Zeile 8 der Speicherphosphorschicht 1 erhaltene Detektorsignal S wird, wie bereits näher erläutert, durch ein Tiefpassfilter 12 gefiltert und in einem Analog-Digital-Wandler 13 mit einer Abtastfrequenz f abgetastet, wobei eine Vielzahl von Detektorsignalwerten D erhalten wird. Die Detektorsignalwerte D werden in einem Speicher 14 zwischengespeichert.

Die Recheneinheit 15 greift auf die im Speicher 14 zwischengespeicherten Detektorsignalwerte D zu und leitet daraus einzelne Bildsignalwerte B ab. Die Ablei-tung der Bildsignalwerte B, insbesondere die Zuordnung einzelner Detektorsignalwerte D zu jeweils einem Bildpunkt und die Berechnung des Bildsignalwertes aus den zugeordneten Detektorsignalwerten D, erfolgt bei dieser Variante der Signalverarbeitung in Abhängigkeit von den Referenzzeitpunkten t1 und t2.

Fig. 5a zeigt ein erstes Beispiel von Detektorsignalwerten D über der Zeit t, welche aus dem Detektorsignal S für eine Zeile 8 abgeleitet wurden. Neben den Detektorsignalwerten D sind in dem Diagramm die beiden Referenzzeitpunkte t1 und t2 eingetragen, zu welchen der Stimulationslichtstrahl 3 die beiden Sensoren 10 bzw. 11 passiert. Die für eine Ableitung von Bildsignalwerten B für die einzelnen Bildpunkte des Röntgenbildes entlang der Zeile 8 relevanten Detektorsignalwerte D liegen zwischen den beiden Referenzzeitpunkten t1 und t2. Dementsprechend werden lediglich diese Detektorsignalwerte D für die Ableitung der einzelnen Bildsignalwerte B herangezogen.

In einem weiteren Auslesevorgang werden beispielhaft die in Fig. 5b dargestellten Detektorsignalwerte D für eine weitere Zeile 8 ermittelt. Der zweite Referenzzeitpunkt t2 wird hierbei gegenüber dem in Fig. 5a dargestellten Beispiel erst zu einem späteren Zeitpunkt erreicht. Dies ist auf Gleichlaufschwankungen des Stimulationslichtstrahls 3 während dessen Bewegung entlang der Zeile 8 zurückzuführen. Im zeitlichen Mittel betrachtet, überstreicht der Stimulationslichtstrahl 3 die auszulesende Zeile 8 hierbei mit einer Geschwindigkeit, welche niedriger ist als in dem in Fig. 5a dargestellten Beispiel.

Dieser Effekt wird erfindungsgemäß dadurch kompensiert, dass die jeweils zwischen den beiden Referenzzeitpunkten t1 und t2 erfassten Detektorsignalwerte D auf die vorgegebene Anzahl von einzelnen Bildpunkten verteilt werden. Soll eine Zeile 8 des ausgelesenen Röntgenbildes beispielsweise 1000 Bildpunkte umfassen, und werden in dem in Fig. 5a dargestellten Beispiel zwischen den beiden Referenzzeitpunkten t1 und t2 5000 Detektorsignalwerte D abgeleitet, so werden jedem einzelnen Bildpunkt jeweils fünf Detektorsignalwerte zugeordnet und aus den jeweils zugeordneten Detektorsignalwerten ein Bildsignalwert errechnet, insbesondere durch Mittelwertbildung.

Für das in Fig. 5b dargestellte Beispiel wird angenommen, dass zwischen den beiden Referenzzeitpunkten t1 und t2 insgesamt 5100 Detektorsignalwerte Derhalten werden. Diese werden nun ebenfalls auf die 1000 vorgegebenen Bildpunkte verteilt. Wird beispielsweise angenommen, dass sich die Gleichlaufschwankungen des Stimulationslichtstrahls im Wesentlichen gleichmäßig über den gesamten Zeitraum zwischen den beiden Referenzzeitpunkten t1 und t2 verteilen, so werden jedem Bildpunkt im Mittel 5,1 Detektorsignalwerte D zugeordnet und daraus durch Mittelwertbildung ein entsprechender Bildsignalwert abgeleitet.

Eine solche Mittelwertbildung kann beispielsweise aus einer entsprechenden Gewichtung von nichtganzzahligen Anteilen der Detektorsignalwerte D erfolgen. Beispielsweise würden bei einer solchen Mittelwertbildung für den ersten Bildsignalwert im genannten Beispiel der Fig. 5b fünf Detektorsignalwerte zu jeweils 100 % und der darauf folgende sechste Detektorsignalwert zu nur 10 % gewichtet werden.

Alternativ können einzelne Detektorsignalwerte stets vollständig einzelnen Bildpunkten zugeordnet werden. Im dargestellten Beispiel der Fig. 5b wäre es beispielsweise denkbar, stets neun benachbarten Bildpunkten jeweils fünf Detektorsignalwerte D zuzuordnen und dem jeweils darauf folgenden zehnten Bildpunkt sechs Detektorsignalwerte zuzuordnen. Alle weiteren Zuordnungen von Detektorsignalwerten D zu Bildpunkten erfolgen dann entsprechend.

Bei diesen Berechnungsmethoden wird eine statistische Gleichverteilung von Geschwindigkeitsschwankungen des Stimulationslichtstrahls 3 während dessen Bewegung über die Zeile 8 angenommen. Damit können Bildfehler infolge von Gleichlaufschwankungen des Stimulationslichtstrahls, wie z.B. sogenannte Jitter-Effekte, auf einfache und zuverlässige Weise vermindert werden.

Ein Verfahren zur weiteren Verbesserung der Bildqualität sieht vor, das zeitliche Verhalten der Bewegung des Stimulationslichtstrahls entlang einer Zeile zu erfassen und dieses bei der Ableitung von Bildsignalwerten B aus den einzelnen Detektorsignalwerten D zu berücksichtigen.

In Fig. 6 ist eine bevorzugte Ausgestaltung einer entsprechenden Vorrichtung zur Durchführung dieses Verfahrens dargestellt. Der von einem Laser 2 erzeugte Stimulationslichtstrahl 3 wird durch einen rotierenden Polygonspiegel 20 abgelenkt und trifft nach Durchlaufen eines geeigneten optischen Systems, welches im dargestellten Beispiel aus einer Linse 21 und einem Zylinderspiegel 22 besteht, auf eine Sensorzeile 30. Die Sensorzeile 30 weist eine Vielzahl regelmäßig beabstandeter lichtempfindlicher Sensoren 34 auf. Während der Bewegung des Stimulationslichtstrahls 3 entlang der Sensorzeile 30 überstreicht dieser sukzessive die einzelnen Sensoren 34. Dabei wird jeweils zu einem Referenzzeitpunkt ti ein Puls P(ti) erzeugt, welcher an eine Verarbeitungseinrichtung (nicht dargestellt) weitergeleitet wird.

Die Sensorzeile 30 kann in der Ebene der Speicherphosphorschicht 1, alternativ aber auch in geringem Abstand vor oder hinter der Ebene der Speicherphosphorschicht 1 positioniert sein.

Vorzugsweise werden auf diese Weise vor dem eigentlichen Auslesen der Speicherphosphorschicht 1 eine Vielzahl von Referenzzeitpunkten ti während mindestens einer vollständigen 360°-Drehung des Polygonspiegels erfasst und in der Verarbeitungseinrichtung gespeichert. Die Sensorzeile 30 kann dann aus dem Strahlengang entfernt werden, z.B. durch eine geeignete mechanische Schwenkvorrichtung (nicht dargestellt). Falls die Sensorzeile 30 in einem geringen Abstand hinter der Speicherphosphorschicht 1 angeordnet ist, kann sie an ihrer Position bleiben und wird beim Auslesen der Speicherphosphorschicht 1 durch diese verdeckt.

Der eigentliche Auslesevorgang der Speicherphosphorschicht 1 kann nun beginnen, indem diese entlang der Transportrichtung T am Strahlengang vorbeigeführt wird. Werden dabei, wie bereits im Zusammenhang mit den Fig. 1, 5a und 5b erläutert, mittels der beiden Sensoren 10 und 11 jeweils ein erster und zweiter Referenzzeitpunkt t1 und t2 erfasst, so kann die Zuordnung der zwischen den beiden Referenzzeitpunkten t1 und t2 erhaltenen Detektorsignalwerte D zu einzelnen Bildpunkten unter gleichzeitiger Berücksichtigung der vorab erfassten Referenzzeitpunkte ti erfolgen. Aus den zugeordneten Detektorsignalwerten D werden dann die entsprechenden Bildsignalwerte B abgeleitet.

Für die Zuordnung von zwischen jeweils zwei Referenzzeitpunkten tn und tn+1 abgeleiteten Detektorsignalwerten D zu den einzelnen Bildpunkten, welche zwischen der n-ten und (n+1)-ten Referenzposition liegen, gelten hierbei die Ausführungen zu dem im Zusammenhang mit den Fig. 5a und 5b beschriebenen Verfahren entsprechend.

Fig. 7 zeigt einen Querschnitt (Ausschnitt) durch die in Fig. 6 dargestellte Sensorzeile 30. Die Sensorzeile 30 umfasst eine Leiterplatte 31, welche aus mit Glasfasern verstärktem Kunstharz besteht und für das Licht des Stimulationslichtstrahls 3 zumindest teilweise transparent ist.

Auf der dem Stimulationslichtstrahl 3 zugewandten Seite der Leiterplatte 31 werden durch Maskierung einer darauf befindlichen Metallschicht 32, welche vorzugsweise aus Kupfer besteht, einzelne Schlitzblenden 33 erzeugt.

Auf der gegenüberliegenden Seite der Leiterplatte 31 sind jeweils im Bereich der Schlitzblenden 33 die Sensoren 34, insbesondere in Form von Fotodioden, angebracht, welche eine lichtempfindliche Schicht 36 auf der der Leiterplatte 31 zugewandten Seite aufweisen. Die Sensoren 34 sind mit auf der Leiterplatte 31 befindlichen Leiterbahnen 35 verbunden und entsprechend verschaltet, beispielsweise über eine Parallelschaltung. Als Sensoren 34 sind insbesondere Fotodioden in SMD-Bauform geeignet, wie z.B. vom Typ *BPW34 Reverse Gullwing* der Firma *Osram.*

Durch diese Ausführung der Sensorzeile 30 wird eine besonders einfache, kompakte und zuverlässige Erfassung der Referenzzeitpunkte ti entlang der Sensorzeile 30 erreicht. Hierdurch wird bei der oben beschriebenen Ableitung von Bildsignalwerten B aus den Detektorsignalwerten D eine besonders hohe Bildqualität erzielt.

## Patentansprüche

1. Vorrichtung zum Auslesen von in einer Speicherphosphorschicht (1) gespeicherter Röntgeninformation, wobei ein aus einer Vielzahl von Bildpunkten zusammengesetztes Röntgenbild erhalten wird, umfassend:
- eine Bestrahlungseinrichtung (2, 4, 5, 20 - 22) zum Bestrahlen der Speicherphosphorschicht (1) mit einem Stimulationslichtstrahl (3), welcher entlang einer Zeile (8) über die Speicherphosphorschicht (1) bewegt werden und dabei die Speicherphosphorschicht (1) zur Aussendung von Emissionslicht anregen kann,
- einen Detektor (7) zum Erfassen von von der Speicherphosphorschicht (1) ausgesandtem Emissionslicht und zur Umwandlung des erfassten Emissionslichts in ein entsprechendes Detektorsignal (S) und
- eine Verarbeitungseinrichtung (16) zum Ableiten von Bildsignalwerten (B) für die Bildpunkte des Röntgenbildes entlang der Zeile (8) aus dem Detektorsignal (S),
**dadurch gekennzeichnet, dass**
- mindestens zwei Sensoren (10, 11, 34) vorgesehen sind, welche an unterschiedlichen Referenzpositionen angeordnet sind und mindestens zwei Referenzzeitpunkte (t1, t2, ti) erfassen können, zu welchen sich der Stimulationslichtstrahl (3) an den unterschiedlichen Referenzpositionen befindet, und
- die Verarbeitungseinrichtung (16) zum Ableiten einer Vielzahl von Detektorsignalwerten (D) aus dem Detektorsignal (S) und zum Ableiten von Bildsignalwerten (B) aus zwischen jeweils zwei Referenzzeitpunkten (t1, t2, ti) abgeleiteten Detektorsignalwerten (D) ausgebildet ist.

2. Vorrichtung nach Anspruch 1, **dadurch gekennzeichnet, dass** ein erster Sensor (10) derart angeordnet ist, dass ein erster Referenzzeitpunkt (t1) vor der Bewegung des Stimulationslichtstrahls (3) entlang der Zeile (8) erfasst werden kann, und ein zweiter Sensor (11) derart angeordnet ist, dass ein zweiter Referenzzeitpunkt (t2) nach der Bewegung des Stimulationslichtstrahls (3) entlang der Zeile (8) erfasst werden kann.

3. Vorrichtung nach Anspruch 2, **dadurch gekennzeichnet, dass** der erste Sensor (10) im Bereich eines Anfangs und der zweite Sensor (11) im Bereich eines Endes der Zeile (8) angeordnet ist.

4. Vorrichtung nach Anspruch 2 oder 3, **dadurch gekennzeichnet, dass** der erste und/oder zweite Sensor (t1 bzw. t2) derart angeordnet ist, dass der Stimulationslichtstrahl (3) eine bestimmte Zeitspanne vor bzw. nach der Bewegung entlang der Zeile (8) auf den ersten bzw. den zweiten Sensor (10 bzw. 11) trifft.

5. Vorrichtung nach Anspruch 1, **dadurch gekennzeichnet, dass**
- entlang einer Sensorzeile (30) mehrere Sensoren (34) angeordnet sind, welche mehrere Referenzzeitpunkte (ti) während der Bewegung des Stimulationslichtstrahls (3) entlang der Sensorzeile (30) erfassen können und
- die Verarbeitungseinrichtung (16) zum Ableiten von Bildsignalwerten (B) aus den zwischen jeweils zwei Referenzzeitpunkten (ti) abgeleiteten Detektorsignalwerten (D) ausgebildet ist.

6. Vorrichtung nach einem der Ansprüche 1 bis 5, **dadurch gekennzeichnet, dass** die Sensoren (34) mit jeweils einer Schlitzblende (33) versehen sind, durch welche zumindest ein Teil des Stimulationslichtstrahls (3) hindurchtreten und von dem jeweiligen Sensor (34) erfasst werden kann.

7. Vorrichtung nach Anspruch 6, **dadurch gekennzeichnet, dass** eine Leiterplatte (31) vorgesehen ist, an welcher die Sensoren (34) angebracht sind und welche die jeweiligen Schlitzblenden (33) umfasst.

8. Vorrichtung nach Anspruch 7, **dadurch gekennzeichnet, dass** die Leiterplatte (31) für das Licht des Stimulationslichtstrahls (3) zumindest teilweise durchlässig ist und sich die einzelnen Schlitzblenden (33) auf der dem einfallenden Stimulationslichtstrahl (3) zugewandten Seite der Leiterplatte (31) befinden.

9. Vorrichtung nach Anspruch 8, **dadurch gekennzeichnet, dass** die Schlitzblenden (33) aus einem für das Licht des Stimulationslichtstrahls (3) im Wesentlichen undurchlässigen Material, insbesondere aus Metall, bestehen.

10. Vorrichtung nach einem der Ansprüche 7 bis 9, **dadurch gekennzeichnet, dass** die Sensoren (34) auf der dem einfallenden Stimulationslichtstrahl (3) abgewandten Seite der Leiterplatte (31) im Bereich der einzelnen Schlitzblenden (33) angeordnet sind.

11. Vorrichtung nach Anspruch 10, **dadurch gekennzeichnet, dass** die Sensoren (34), welche insbesondere als Fotodioden ausgebildet sind, jeweils eine lichtempfindliche Fläche (36) aufweisen, welche der Leiterplatte (31) zugewandt ist.

12. Verfahren zum Auslesen von in einer Speicherphosphorschicht (1) gespeicherter Röntgeninformation, bei welchem ein aus einer Vielzahl von Bildpunkten zusammengesetztes Röntgenbild erhalten wird, mit folgenden Schritten:
- Bestrahlen der Speicherphosphorschicht (1) mit einem Stimulationslichtstrahl (3), welcher entlang einer Zeile (8) über die Speicherphosphorschicht (1) bewegt wird und dabei die Speicherphosphorschicht (1) zur Aussendung von Emissionslicht anregen kann,
- Erfassen von von der Speicherphosphorschicht (1) ausgesandtem Emissionslicht und Umwandlung des erfassten Emissionslichts in ein entsprechendes Detektorsignal (S),
- Ableiten von Bildsignalwerten (B) für die Bildpunkte des Röntgenbildes entlang der Zeile (8) aus den Detektorsignal (S),
**dadurch gekennzeichnet, dass**
- mindestens zwei Referenzzeitpunkte (t1, t2, ti) erfasst werden, zu welchen sich der Stimulationslichtstrahl (3) an mindestens zwei unterschiedlichen Referenzpositionen befindet,
- eine Vielzahl von Detektorsignalwerten (D) aus dem Detektorsignal (S) abgeleitet wird und
- Bildsignalwerte (B) aus zwischen jeweils zwei Referenzzeitpunkten (t1, t2, ti) abgeleiteten Detektorsignalwerten (D) abgeleitet werden.

13. Verfahren nach Anspruch 12, **dadurch gekennzeichnet, dass** ein erster Referenzzeitpunkt (t1) vor der Bewegung des Stimulationslichtstrahls (3) entlang der Zeile (8) der Speicherphosphorschicht (1) und ein zweiter Referenzzeitpunkt (t2) nach der Bewegung des Stimulationslichtstrahls (3) entlang der Zeile (8) der Speicherphosphorschicht (1) erfasst werden.

14. Verfahren nach Anspruch 12, **dadurch gekennzeichnet, dass**
- vor dem Auslesen der Speicherphosphorschicht (1) mehrere Referenzzeitpunkte (ti) erfasst und gespeichert werden und
- während des Auslesens der Speicherphosphorschicht (1) die Bildsignalwerte (B) aus den zwischen jeweils zwei Referenzzeitpunkten (ti) abgeleiteten Detektorsignalwerten (D) abgeleitet werden.

15. Verfahren nach einem der Ansprüche 12 bis 14, **dadurch gekennzeichnet, dass** die Bildsignalwerte (B) jeweils durch Bildung eines, insbesondere arithmetischen, Mittelwertes aus mehreren Detektorsignalwerten (D) abgeleitet werden.

16. Verfahren nach einem der Ansprüche 12 bis 15, **dadurch gekennzeichnet, dass** die Anzahl der Detektorsignalwerte (D), aus welchen jeweils ein Bildsignalwert (B) abgeleitet wird, unter Heranziehung der Referenzzeitpunkte (t1, t2, ti) ermittelt wird.

17. Verfahren nach einem der Ansprüche 12 bis 16, **dadurch gekennzeichnet, dass** das Ableiten der Detektorsignalwerte (D) durch Abtasten des Detektorsignals (S) mit einer Abtastfrequenz (f) erfolgt, welche ein ganzzahliges Vielfaches (N) des Kehrwertes einer mittleren Zeitdauer (Δt) ist, welche der Stimulationslichtstrahl (3) im zeitlichen Mittel für die Bewegung über einen Bildpunkt des Röntgenbildes entlang der Zeile (8) benötigt: f = N/Δt, wobei N eine ganze Zahl und größer als 1 ist.

## Claims

1. A device for reading out X-ray information stored in a storage phosphor layer (1), thereby obtaining an X-ray image consisting of a plurality of pixels, said device comprising:
- an irradiation unit (2, 4, 5, 20 - 22) for irradiating the storage phosphor layer (1) with a stimulation light beam (3), which can be moved along a line (8) across the storage phosphor layer (1) and can thereby stimulate the storage phosphor layer (1) into emitting emission light,
- a detector (7) for capturing emission light emitted by the storage phosphor layer (1) und for converting the captured emission light into a corresponding detector signal (S) and
- a processing unit (16) for deriving image signal values (B) for the pixels of the X-ray image along the line (8) from the detector signal (S),
**characterised in that**
- at least two sensors (10, 11, 34) are provided, which are arranged on different reference positions and which can capture at least two reference times (t1, t2, ti), at which the stimulation light beam (3) is located at the different reference positions, and
- **in that** the processing unit (16) is designed to derive a plurality of detector signal values (D) from the detector signal (S) and to derive image signal values (B) from detector signal values (D) derived each between two reference times (t1, t2, ti).

2. The device according to claim 1, **characterised in that** a first sensor (10) is arranged such that a first reference time (t1) can be captured before the movement of the stimulation light beam (3) along the line (8) and **in that** a second sensor (11) is arranged such that a second reference time (t2) can be captured after the movement of the stimulation light beam (3) along the line (8).

3. The device according to claim 2, **characterised in that** the first sensor (10) is arranged in the area of a start and the second sensor (11) in the area of an end of the line (8).

4. The device according to claim 2 or 3, **characterised in that** the first and/or second sensor (t1 and t2 respectively) is arranged such that the stimulation light beam (3) strikes the first and second sensor respectively (10 and 11 respectively) at a specified period of time before or after the movement along the line (8).

5. The device according to claim 1, **characterised**
- **in that** several sensors (34) are arranged along a sensor row (30), said sensors being able to capture several reference times (ti) during the movement of the stimulation light beam (3) along the sensor row (30) and
- **in that** the processing unit (16) is designed to derive image signal values (B) from the detector signal values (D) derived each between two reference times (ti).

6. The device according to any of claims 1 to 5, **characterised in that** the sensors (34) are fitted each with a slit diaphragm (33), through which at least a part of the stimulation light beam (3) can pass and can be captured by the respective sensor (34).

7. The device according to claim 6, **characterised in that** a circuit board (31) is provided, on which the sensors (34) are mounted and which comprises the respective slit diaphragms (33).

8. The device according to claim 7, **characterised in that** the circuit board (31) is at least partially transparent to the light of the stimulation light beam (3) and **in that** the individual slit diaphragms (33) are located on the side of the circuit board (31) facing the incident stimulation light beam (3).

9. The device according to claim 8, **characterised in that** the slit diaphragms (33) consist of a material that is essentially non-transparent to the light of the stimulation light beam (3), in particular of metal.

10. The device according to any of claims 7 to 9, **characterised in that** the sensors (34) are arranged on the side of the circuit board (31) facing away from the incident stimulation light beam (3) in the area of the individual slit diaphragms (33).

11. The device according to claim 10, **characterised in that** the sensors (34), which are structured in particular as photodiodes, exhibit each a light-sensitive surface (36) facing the circuit board (31).

12. A process for reading out X-ray information stored in a storage phosphor layer (1), thereby obtaining an X-ray image made up from a plurality of pixels, said process comprising the following steps:
- irradiating the storage phosphor layer (1) with a stimulation light beam (3), which is moved along a line (8) across the storage phosphor layer (1) and can thereby stimulate the storage phosphor layer (1) into emitting emission light,
- capturing emission light emitted by the storage phosphor layer (1) and converting the captured emission light into a corresponding detector signal (S),
- deriving image signal values (B) for the pixels of the X-ray image along the line (8) from the detector signal (S),
**characterised in that**
- at least two reference times (t1, t2, ti) are captured, at which the stimulation light beam (3) is located at at least two different reference positions,
- **in that** a plurality of detector signal values (D) is derived from the detector signal (S) and
- **in that** image signal values (B) are derived from detector signal values (D) derived each between two reference times (t1, t2, ti).

13. The process according claim 12, **characterised in that** a first reference time (t1) is captured before the movement of the stimulation light beam (3) along the line (8) of the storage phosphor layer (1) and **in that** a second reference time (t2) is captured after the movement of the stimulation light beam (3) along the line (8) of the storage phosphor layer (1).

14. The process according claim 12, **characterised in that**
- before the read-out of the storage phosphor layer (1) several reference times (ti) are captured and stored, and
- **in that** during the read-out of the storage phosphor layer (1) the image signal values (B) are derived from the detector signal values (D) derived each between two reference times (ti).

15. The process according to any of claims 12 to 14, **characterised in that** the image signal values (B) are derived respectively by averaging, in particular arithmetically, several detector signal values (D).

16. The process according to any of claims 12 to 15, **characterised in that** the number of detector signal values (D) from which an image signal value (B) is derived is determined on the basis of the reference times (t1, t2, ti).

17. The process according to any of claims 12 to 16, **characterised in that** the derivation of the detector signal values (D) is carried out by sampling the detector signals (S) with a sampling rate (f) which is an integral multiple (N) of the reciprocal value of an average period of time (Δt) required by the stimulation light beam (3) on the time average for moving over a pixel of the X-ray image along the line (8): f = N/Δt, wherein N is an integer and greater than 1.

## Revendications

1. Dispositif destiné à la lecture d'une information radiographique mémorisée dans une couche de mémorisation à base de phosphore (1), avec lequel est obtenue une image radiographique constituée d'une multitude de points d'image, comportant :
- un dispositif d'exposition (2, 4, 5, 20 - 22) pour exposer la couche de mémorisation à base de phosphore (1) à un faisceau de lumière de stimulation (3) pouvant être déplacé au-dessus de la couche de mémorisation à base de phosphore (1) le long d'une ligne (8), et pouvant en l'occurrence stimuler la couche de mémorisation à base de phosphore (1) à émettre de la lumière d'émission,
- un détecteur (7) pour détecter de la lumière d'émission émise par la couche de mémorisation à base de phosphore (1), et pour convertir la lumière d'émission détectée en un signal de détection (S) correspondant, et
- un dispositif de traitement (16) destiné à dériver du signal de détection (S) des valeurs de signaux d'image (B) pour les points d'image de l'image radiographique le long de la ligne (8),
**caractérisé en ce que**
- il est prévu au moins deux détecteurs (10, 11, 34) qui sont disposés sur différentes positions de référence, et qui peuvent détecter au moins deux moments de référence (t1, t2, ti) auxquels le faisceau de lumière de stimulation (3) se trouve sur les différentes positions de référence, et
- **en ce que** le dispositif de traitement (16) est agencé pour dériver du signal de détection (S) une pluralité de valeurs de signaux de détection (D), et pour dériver des valeurs de signaux d'image (B) à partir de valeurs de signaux de détection (D) dérivées entre deux moments de référence (t1, t2, ti) respectifs.

2. Dispositif selon la revendication 1, **caractérisé en ce qu'**un premier détecteur (10) est disposé de telle sorte qu'un premier moment de référence (t1) puisse être détecté avant le déplacement du faisceau de lumière de stimulation (3) le long de la ligne (8), et **en ce qu'**un deuxième détecteur (11) est disposé de telle sorte qu'un deuxième moment de référence (t2) puisse être détecté après le déplacement du faisceau de lumière de stimulation (3) le long de la ligne (8).

3. Dispositif selon la revendication 2, **caractérisé en ce que** le premier détecteur (10) est disposé dans la zone d'un début, et le deuxième détecteur (11) dans la zone d'une fin de la ligne (8).

4. Dispositif selon la revendication 2 ou 3, **caractérisé en ce que** le premier et/ou le deuxième détecteur (t1 ou t2) sont disposés de telle sorte que le faisceau de lumière de stimulation (3) arrive sur le premier ou le deuxième détecteur (10 ou 11) un certain laps de temps avant ou après le déplacement le long de la ligne (8).

5. Dispositif selon la revendication 1, **caractérisé en ce que**
- plusieurs détecteurs (34) sont disposés le long d'une ligne de détection (30), lesquels sont en mesure de détecter plusieurs moments de référence (ti) pendant le déplacement du faisceau de lumière de stimulation (3) le long de la ligne de détection (30), et
- **en ce que** le dispositif de traitement (16) est agencé pour dériver des valeurs de signaux d'image (B) des valeurs de signaux de détection (D) dérivées entre deux moments de référence (ti) respectifs.

6. Dispositif selon l'une des revendications 1 à 5, **caractérisé en ce que** chacun des détecteurs (34) est doté d'un diaphragme à fente (33), à travers lequel peut passer au moins une partie du faisceau de lumière de stimulation (3), laquelle peut être détectée par le détecteur (34) respectif.

7. Dispositif selon la revendication 6, **caractérisé en ce qu'**il est prévu une carte de circuits imprimés (31) sur laquelle sont disposés les détecteurs (34), et qui inclut les diaphragmes à fente (33) respectifs.

8. Dispositif selon la revendication 7, **caractérisé en ce que** la carte de circuits imprimés (31) est au moins partiellement perméable à la lumière du faisceau de lumière de stimulation (3), et **en ce que** les différents diaphragmes à fente (33) sont situés sur la face de la carte de circuits imprimés (31) qui est orientée vers le faisceau incident de lumière de stimulation (3).

9. Dispositif selon la revendication 8, **caractérisé en ce que** les diaphragmes à fente (33) sont constitués d'un matériau qui est sensiblement imperméable à la lumière du faisceau de lumière de stimulation (3), notamment de métal.

10. Dispositif selon l'une des revendications 7 à 9, **caractérisé en ce que** les détecteurs (34) sont disposés dans la zone des différents diaphragmes à fente (33), sur la face de la carte de circuits imprimés (31) qui est opposée au faisceau incident de lumière de stimulation (3).

11. Dispositif selon la revendication 10, **caractérisé en ce que** les détecteurs (34), qui sont notamment réalisés sous la forme de photodiodes, comportent chacun une surface photosensible (36), qui est orientée vers la carte de circuits imprimés (31).

12. Procédé destiné à la lecture d'une information radiographique mémorisée dans une couche de mémorisation à base de phosphore (1), avec lequel est obtenue une image radiographique constituée d'une multitude de points d'image, comportant les étapes suivantes :
- exposition de la couche de mémorisation à base de phosphore (1) à un faisceau de lumière de stimulation (3), qui est déplacé au-dessus de la couche de mémorisation à base de phosphore (1) le long d'une ligne (8), et peut en l'occurrence stimuler la couche de mémorisation à base de phosphore (1) à émettre de la lumière d'émission,
- détection de la lumière d'émission émise par la couche de mémorisation à base de phosphore (1), et conversion de la lumière d'émission détectée en un signal de détection (S) correspondant,
- dérivation du signal de détection (S) le long de la ligne (8) de valeurs de signaux d'image (B) pour les points d'image de l'image radiographique,
**caractérisé en ce que**
- il est détecté au moins deux moments de référence (t1, t2, ti) auxquels le faisceau de lumière de stimulation (3) se trouve sur au moins deux différentes positions de référence,
- une pluralité de valeurs de signaux de détection (D) sont dérivées du signal de détection (S), et
- **en ce que** des valeurs de signaux d'image (B) sont dérivées de valeurs de signaux de détection (D) dérivées entre deux moments de référence (t1, t2, ti) respectifs.

13. Procédé selon la revendication 12, **caractérisé en ce qu'**un premier moment de référence (t1) est détecté avant le déplacement du faisceau de lumière de stimulation (3) le long de la ligne (8) de la couche de mémorisation à base de phosphore (1), et **en ce qu'**un deuxième moment de référence (t2) est détecté après le déplacement du faisceau de lumière de stimulation (3) le long de la ligne (8) de la couche de mémorisation à base de phosphore (1).

14. Procédé selon la revendication 12, **caractérisé en ce que**
- plusieurs moments de référence (ti) sont détectés et mémorisés avant la lecture de la couche de mémorisation à base de phosphore (1), et
- **en ce que** les valeurs de signaux d'image (B) issues des valeurs de signaux de détection (D) dérivées entre deux moments de référence (ti) respectifs sont dérivées pendant la lecture de la couche de mémorisation à base de phosphore (1).

15. Procédé selon l'une des revendications 12 à 14, **caractérisé en ce que** les valeurs de signaux d'image (B) sont respectivement dérivées de plusieurs valeurs de signaux de détection (D) par le calcul d'une valeur moyenne, notamment arithmétique.

16. Procédé selon l'une des revendications 12 à 15, **caractérisé en ce que** le nombre des valeurs de signaux de détection (D), desquelles est respectivement dérivée une valeur de signal d'image (B), est déterminé moyennant l'utilisation des moments de référence (t1, t2, ti).

17. Procédé selon l'une des revendications 12 à 16, **caractérisé en ce que** la dérivation des valeurs de signaux de détection (D) est effectuée par le balayage du signal de détection (S) avec une fréquence de balayage (f), qui est un multiple entier (N) de la valeur inverse d'une durée de temps moyenne (Δt) qui est nécessaire au faisceau de lumière de stimulation (3) en moyenne dans le temps pour le déplacement au-dessus d'un point d'image de l'image radiographique le long de la ligne (8) : f = N / Δt, N étant un entier et étant supérieur à 1.
